(19) Europäisches Patentamt
European Patent Office
Office européen des brevets

(11) **EP 4 556 131 A1**

(12) **EUROPEAN PATENT APPLICATION**
published in accordance with Art. 153(4) EPC

(43) Date of publication:
**21.05.2025 Bulletin 2025/21**

(21) Application number: **23867891.6**

(22) Date of filing: **28.07.2023**

(51) International Patent Classification (IPC):
*B21B 37/28* (2006.01)     *B21B 1/22* (2006.01)
*B21B 37/38* (2006.01)     *B21B 37/56* (2006.01)
*B21B 38/02* (2006.01)     *B21C 51/00* (2006.01)
*B21D 1/05* (2006.01)

(52) Cooperative Patent Classification (CPC):
**B21B 1/22; B21B 37/28; B21B 37/38; B21B 37/56;
B21B 38/02; B21C 51/00; B21D 1/05**

(86) International application number:
**PCT/JP2023/027672**

(87) International publication number:
**WO 2024/062765 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 JP 2022150039**

(71) Applicant: **JFE Steel Corporation
Tokyo 100-0011 (JP)**

(72) Inventors:
• **BABA, Wataru
Tokyo 100-0011 (JP)**
• **TAKASHIMA, Yukio
Tokyo 100-0011 (JP)**
• **KOBAYASHI, Hirokazu
Tokyo 100-0011 (JP)**

(74) Representative: **Hoffmann Eitle
Patent- und Rechtsanwälte PartmbB
Arabellastraße 30
81925 München (DE)**

(54) **METHOD FOR CONTROLLING WARP SHAPE OF METALLIC BAND, METHOD FOR PRODUCING METALLIC BAND, AND DEVICE FOR CONTROLLING WARP SHAPE OF METALLIC BAND**

(57)     To provide a metal-strip warped-shape control method capable of controlling the warped shapes with a W-shaped cross-section in the width direction and the warped shapes approximated with higher-order functions, enabling the reduction of the warp height of a metal strip downstream of a temper rolling mill.

In a metal-strip manufacturing facility including a temper rolling mill 31 that corrects a shape of a metal strip 1 continuously conveyed, and a warped-shape measurement device that measures a warped shape of the metal strip, a metal-strip warped-shape control method for controlling an exit-side warped shape, which is a warped shape of the metal strip 1 downstream of the temper rolling mill 31, includes: calculating an approximation curve for the warped shape of the metal strip 1 using an approximation method selected from parabolic approximation, circular arc approximation, and envelope approximation; and, based on the calculated approximation curve, setting operating parameters of the temper rolling mill 31 that can reduce the warp height of the exit-side warped shape.

FIG. 1

## Description

Technical Field

The present invention relates to a metal-strip warped-shape control method, a metal-strip manufacturing method, and a metal-strip warped-shape control device.

Background Art

In a metal-strip continuous annealing facility, it is important to control heat treatment conditions, such as heating and cooling, to impart the mechanical properties required for a metal strip being processed. In the manufacture of high-strength steel sheets, controlling heat treatment conditions often involves increasing the cooling rate for cooling the metal strip, as well as tempering treatment for reheating the metal strip after cooling, from the viewpoint of improving the press formability.

A continuous annealing facility for manufacturing high-strength steel sheets has a heating zone, a soaking zone, and a cooling zone. Cooling methods employed in the cooling zone include liquid quenching, roll cooling, air-water mixture (mist) cooling, gas jet cooling, and the like. An appropriate cooling method is selected accordingly in order to control the materials of the metal strip. For example, when manufacturing a high-strength steel sheet with high tensile strength, it is effective to increase the cooling rate of the metal strip in the cooling zone. However, when the cooling rate of the metal strip is increased, there is a problem that the shape of the metal strip becomes easily changeable due to the influence of the thermal contraction of the metal strip and the volume expansion associated with the phase transformation of the metallic microstructure.

In order to flatten the shape of the metal strip, shape correction is performed using a temper rolling mill disposed within the downstream part of the continuous annealing facility. However, when the yield stress of the metal strip is large, it may be difficult to sufficiently flatten the shape of the metal strip even if shape correction is performed using the temper rolling mill.

Patent Literature 1 discloses, as a temper rolling method for such high-strength steel sheets, applying work rolls with a surface average roughness exceeding 10.0 $\mu$m to a temper rolling mill. Patent Literature 2 discloses measuring the shape of a metal strip and operating a shape control actuator of a rolling machine based on the deviation between the measured shape and a target shape. In Patent Literature 2, the distribution of elongation in the width direction of the metal strip is estimated based on the contact load distribution in the width direction measured by a contact-type shape meter with multiple load cells embedded inside shape measurement rolls.

Patent Literature 3 discloses a method for adjusting the operating conditions of a temper rolling mill and a tension leveler to achieve an apparently flat shape of a steel sheet, using a shape measurement device, disposed between the temper rolling mill and the tension leveler, that optically measures the shape of the steel sheet. In Patent Literature 3, the periodic pattern of light projected onto the steel sheet is captured by an image capturing device, and the elongation percentage distribution (elongation difference) of the steel sheet in the width direction is measured using an image analyzer.

Citation List

Patent Literature

> PTL 1: Japanese Unexamined Patent Application Publication No. 2013-176802
> PTL 2: Japanese Patent No. 6673285
> PTL 3: Japanese Unexamined Patent Application Publication No. 2018-65190

Summary of Invention

Technical Problem

The method disclosed in Patent Literature 1 is for performing temper rolling using work rolls having a specific surface roughness, not taking into consideration the shape of the metal strip on the entry side of the temper rolling mill. Therefore, if the warp height of the metal strip on the entry side of the temper rolling mill is high, it may not be possible to sufficiently suppress the warped shape, and the warp height of the metal strip may remain high even after temper rolling.

The method disclosed in Patent Literature 2 is for dynamically controlling the shape of the metal strip based on the shape of the metal strip measured on the exit side of the temper rolling mill, which may stabilize the longitudinal shape of the metal strip. However, the shape meter used in Patent Literature 2 is for estimating the distribution of elongation in the width direction of the metal strip, that is, estimating the wavy shape of the metal strip. Therefore, it is difficult to control the warped shapes with a W-shaped cross-section in the width direction that may occur in the high-strength steel sheet after quenching, as well as the warped shapes approximated with higher-order functions.

The shape meter used in the method disclosed in Patent Literature 3 is also for measuring the distribution of elongation in the width direction of the metal strip, that is, estimating the wavy shape of the metal strip. Therefore, like the method disclosed in Patent Literature 2, it is difficult to control the warped shapes with a W-shaped cross-section in the width direction that may occur in the high-strength steel sheet after quenching, as well as the warped shapes approximated with higher-order functions.

In order to solve the above-mentioned problem, it is an object of the present invention to provide, in a metal-strip manufacturing facility including a temper rolling mill, a metal-strip warped-shape control method, a metal-strip manufacturing method using the warped-shape control method, and a metal-strip warped-shape control device capable of reducing the warp height of a metal strip downstream of the temper rolling mill by controlling the warped shapes with a W-shaped cross-section in the width direction and the warped shapes approximated with higher-order functions.

Solution to Problem

The following is a solution to solve the above-mentioned problem.

[1] In a metal-strip manufacturing facility including a temper rolling mill that corrects a shape of a metal strip continuously conveyed, and a warped-shape measurement device that measures a warped shape of the metal strip, a metal-strip warped-shape control method for controlling an exit-side warped shape, which is a warped shape of the metal strip downstream of the temper rolling mill, including: calculating an approximation curve for the warped shape of the metal strip using an approximation method selected from parabolic approximation, circular arc approximation, and envelope approximation; and, based on the calculated approximation curve, setting operating parameters of the temper rolling mill that can reduce the warp height of the exit-side warped shape.

[2] The metal-strip warped-shape control method according to [1], wherein:

the warped-shape measurement device is an entry-side warped-shape measurement device that measures an entry-side warped shape of the metal strip upstream of the temper rolling mill; and an approximation curve for the entry-side warped shape measured by the entry-side warped-shape measurement device is calculated.

[3] The metal-strip warped-shape control method according to [1], wherein the warped-shape measurement device is an exit-side warped-shape measurement device that measures the exit-side warped shape of the metal strip downstream of the temper rolling mill, and an approximation curve for the exit-side warped shape measured by the exit-side warped-shape measurement device is calculated.

[4] The metal-strip warped-shape control method according to [1], wherein: the warped-shape measurement device is an entry-side warped-shape measurement device that measures an entry-side warped shape of the metal strip upstream of the temper rolling mill; and the exit-side warped shape is predicted using a warped-shape prediction model that receives input data including the entry-side warped shape measured by the entry-side warped-shape measurement device and at least one of operating parameters of the temper rolling mill, and outputs the exit-side warped shape, and an approximation curve for the predicted exit-side warped shape is calculated.

[5] The metal-strip warped-shape control method according to any of [1] to [4], wherein the manufacturing facility is a continuous annealing facility that performs heat treatment on the metal strip, and the temper rolling mill is disposed downstream of a heating zone for heating the metal strip and a cooling zone for cooling the metal strip heated in the heating zone.

[6] A metal-strip manufacturing method for manufacturing a metal strip with a tensile strength of 980 MPa or higher using the metal-strip warped-shape control method according to any of [1] to [5].

[7] A metal-strip warped-shape control device that, in a metal-strip manufacturing facility including a temper rolling mill that corrects a shape of a metal strip continuously conveyed, and a warped-shape measurement device that measures a warped shape of the metal strip, controls an exit-side warped shape, which is a warped shape of the metal strip downstream of the temper rolling mill, including: an acquisition section that acquires the warped shape measured by the warped-shape measurement device; an approximation-curve calculation section that calculates an approximation curve for the warped shape using an approximation method selected from parabolic approximation, circular arc approximation, and envelope approximation; and an operating-parameter specification section that, based on the approximation curve, specifies operating parameters of the temper rolling mill so that the warp height of the exit-side warped shape is reduced.

[8] The metal-strip warped-shape control device according to [7], wherein: the warped-shape measurement device is an entry-side warped-shape measurement device that measures an entry-side warped shape of the metal strip upstream of the temper rolling mill; and the acquisition section acquires the entry-side warped shape measured by the entry-side warped-shape measurement device, and the approximation-curve calculation section calculates an approximation curve for the entry-side warped shape.

[9] The metal-strip warped-shape control device according to [7], wherein: the warped-shape measurement device is an exit-side warped-shape measurement device that measures the exit-side warped shape of the metal strip downstream of the temper rolling mill; and the acquisition section acquires the exit-side warped-shape measured by the exit-side warped-shape measurement device, and the approximation-curve calculation section calculates an approximation curve for the exit-side warped shape.

[10] The metal-strip warped-shape control device according to [7], further including a warped-shape prediction section, wherein: the warped-shape measurement device is an entry-side warped-shape measurement device that measures an entry-side warped shape of the metal strip upstream of the temper rolling mill; and the acquisition section acquires the entry-side warped shape measured by the entry-side warped-shape measurement device, the warped-shape prediction section predicts the exit-side warped shape using a warped-shape prediction model that receives input data including the entry-side warped shape and at least one of operating parameters of the temper rolling mill, and outputs the exit-side warped shape, and the approximation-curve calculation section calculates an approximation curve for the predicted exit-side warped shape.

[11] The metal-strip warped-shape control device according to any of [7] to [10], wherein the manufacturing facility is a continuous annealing facility that performs heat treatment on the metal strip, and the temper rolling mill is disposed downstream of a heating zone for heating the metal strip and a cooling zone for cooling the metal strip heated in the heating zone.

Advantageous Effects of Invention

By implementing the metal-strip warped-shape control method according to the present invention, it is possible to control the warped shapes with a W-shaped cross-section in the width direction and the warped shapes approximated with higher-order functions, enabling the reduction of the warp height of the metal strip downstream of the temper rolling mill. Furthermore, by using the metal-strip warped-shape control method, the manufacture of metal strips with reduced warp height can be achieved.

Brief Description of Drawings

[Fig. 1] Fig. 1 is a schematic diagram illustrating temper rolling system, which is an example of a metal-strip manufacturing facility capable of implementing a metal-strip warped-shape control method according to a first embodiment.
[Fig. 2] Fig. 2 includes schematic diagrams of a temper rolling mill.
[Fig. 3] Fig. 3 is a schematic diagram illustrating an example of the warped shape in the width direction of a metal strip.

[Fig. 4] Fig. 4 is a schematic diagram illustrating a state in which the warped shape of a metal strip 1 is measured using a laser-scanning-type laser rangefinder.
[Fig. 5] Fig. 5 is a schematic diagram illustrating a state in which the warped shape is measured using multiple laser-scanning-type laser rangefinders.
[Fig. 6] Fig. 6 is a schematic diagram illustrating an example of the configuration of a warped-shape control device.
[Fig. 7] Fig. 7 includes graphs each illustrating an approximation curve that approximates the distribution of the warp height in the width direction of the metal strip.
[Fig. 8] Fig. 8 includes schematic diagrams each illustrating a state in which the warping in the width direction of the metal strip is corrected by temper rolling.
[Fig. 9] Fig. 9 includes diagrams each describing a method for setting setting values for the bending force of a work roll bender of the temper rolling mill.
[Fig. 10] Fig. 10 is a schematic diagram illustrating temper rolling system, which is an example of a metal-strip manufacturing facility capable of implementing a metal-strip warped-shape control method according to a second embodiment.
[Fig. 11] Fig. 11 is a schematic diagram illustrating the configuration of a warped-shape control device.
[Fig. 12] Fig. 12 is a schematic diagram illustrating temper rolling system, which is an example of a metal-strip manufacturing facility capable of implementing a metal-strip warped-shape control method according to a third embodiment.
[Fig. 13] Fig. 13 is a schematic diagram illustrating the configuration of a warped-shape control device.
[Fig. 14] Fig. 14 is a diagram illustrating an example of a machine learning model using a neural network.
[Fig. 15] Fig. 15 is a schematic diagram illustrating an example of equipment in a continuous annealing facility for manufacturing a cold-rolled steel sheet.

Description of Embodiments

Hereinafter, the present invention will be specifically described through embodiments of the present invention. The following embodiments illustrate preferred examples of the present invention, and the present invention is not limited in any way by these embodiments.
A metal-strip warped-shape control method according to an embodiment of the present invention can be implemented using a metal-strip manufacturing facility including a temper rolling mill that corrects the shape of a metal strip continuously conveyed. The metal-strip manufacturing facility may be a dedicated facility (temper rolling system) that performs temper rolling on metal strips, or a manufacturing facility consisting of multiple devices including a temper rolling mill.
For example, in a continuous annealing facility that performs heat treatment on a metal strip, a temper rolling mill is disposed to perform temper rolling on the metal strip after it has undergone heat treatment. Such a continuous annealing facility also serves as a metal-strip manufacturing facility capable of implementing the warped-shape control method according to the present embodiment. A metal-strip manufacturing facility capable of implementing the warped-shape control method according to the present embodiment is a manufacturing facility primarily used for manufacturing steel strips. The representative dimensions (thickness/width/length) of the steel strips are as follows: thickness: 0.4 to 3.2 mm, width: 700 to 1800 mm, and length: 600 to 4000 m.

<First Embodiment>

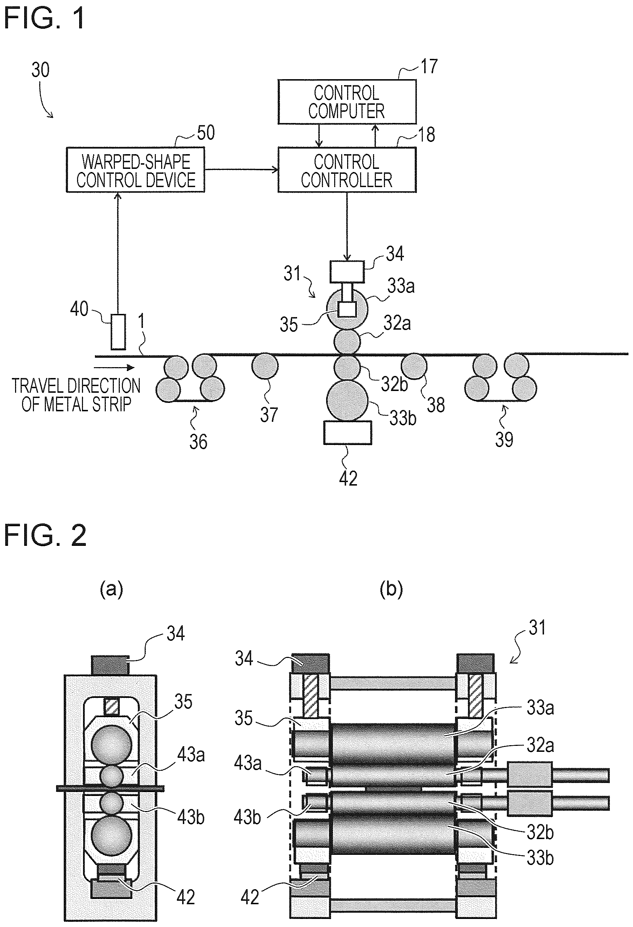

Fig. 1 is a schematic diagram illustrating temper rolling system 30, which is an example of a metal-strip manufacturing facility capable of implementing a metal-strip warped-shape control method according to a first embodiment. The temper rolling system 30 illustrated in Fig. 1 includes a temper rolling mill 31. The temper rolling mill 31 is an equipment that imparts an elongation of about 0.1 to 3.0% to a metal strip 1 to flatten the shape of the metal strip 1.

Fig. 2 includes schematic diagrams of the temper rolling mill 31. Fig. 2(a) illustrates a side view of the temper rolling mill. Fig. 2(b) illustrates a front view of the temper rolling mill. Using Figs. 1 and 2, the temper rolling system 30 including the temper rolling mill 31 will be described. The temper rolling system 30 includes the temper rolling mill 31, entry-side bridle rolls 36, an entry-side tension meter 37, an exit-side tension meter 38, exit-side bridle rolls 39, an entry-side warped-shape measurement device 40, a warped-shape control device 50, a control computer 17, and a control controller 18.

The temper rolling mill 31 includes a pair of work rolls 32a and 32b that come into direct contact with the metal strip 1 being rolled and apply rolling reduction, and backup rolls 33a and 33b that support the pair of work rolls 32a and 32b from above and below to suppress the deflection of the work rolls 32a and 32b. At least one of the work rolls 32a and 32b and the backup rolls 33a and 33b is connected to a drive motor through a coupling and a reducer at one of its two end portions, and the drive motor rotates this roll. The backup roll 33a is supported by a bearing box (backup roll chock) 35 at a shaft end portion. A rolling reduction device 34 adjusts the roll gap, which is the space between the work roll 32a and the work roll 32b, by vertically displacing the bearing box 35. A load detector 42 detects the rolling load of the temper rolling mill 31.

The work rolls 32a and 32b are supported on bearing boxes (work roll chocks) 43a and 43b provided at both end portions thereof. A hydraulic device, which is not illustrated, is provided, causing a force to act between the upper work roll chock 43a and the lower work roll chock 43b. The hydraulic device applies a bending force to the work rolls 32a and 32b by causing a force to act between the upper and lower work roll chocks 43a and 43b, thus imparting deflection deformation to the work rolls 32a and 32b. A mechanism that applies deflection deformation to the work rolls 32a and 32b in this way is referred to as a work roll bender, and the force applied between the upper and lower work roll chocks 43a and 43b is referred to as the bending force. A mechanism that applies force to move the upper and lower work roll chocks 43a and 43b apart may be referred to as an increase bender, while a mechanism that applies force to bring the upper and lower work roll chocks 43a and 43b closer together may be referred to as a decrease bender. The temper rolling mill 31 may be equipped with both the increase bender and the decrease bender. In this case, the bending force is represented as either positive or negative to distinguish between them, with, for example, the bending force of the increase bender designated as positive and that of the decrease bender as negative.

The entry-side bridle rolls 36, the entry-side tension meter 37, the exit-side tension meter 38, and the exit-side bridle rolls 39 are arranged before and after the temper rolling mill 31. The entry-side bridle rolls 36 and the exit-side bridle rolls 39 apply appropriate tension to the metal strip 1. The entry-side tension meter 37 and the exit-side tension meter 38 are provided respectively between the temper rolling mill 31 and the entry-side bridle rolls 36 and between the temper rolling mill 31 and the exit-side bridle rolls 39. The entry-side tension meter 37 and the exit-side tension meter 38 measure the tension of the metal strip 1 on the entry side and the exit side of the temper rolling mill 31.

The temper rolling mill 31 rolls the metal strip 1 at a predetermined elongation percentage. The elongation percentage is the extension percentage of the metal strip 1 before and after temper rolling, and is defined as the rate of increase in the length of the metal strip 1 before and after temper rolling. The elongation percentage is measured by the circumferential speed difference between the circumferential speed of the entry-side bridle rolls 36 and the circumferential speed of the exit-side bridle rolls 39.

Upstream of the temper rolling mill 31, the entry-side warped-shape measurement device 40, which measures the warped shape of the metal strip 1 (hereinafter this warped shape will be referred to as the "entry-side warped shape") is provided. The entry-side warped-shape measurement device 40 may be provided at any position as long as it is upstream of the temper rolling mill 31. Note that it is preferable not to provide equipment that significantly changes the warped shape of the metal strip 1 between the entry-side warped-shape measurement device 40 and the temper rolling mill 31. For example, an annealing furnace, cooling equipment, and rolling equipment significantly change the warped shape of the metal strip 1. Therefore, it is preferable to provide the entry-side warped-shape measurement device 40 between these pieces of equipment and the temper rolling mill 31.

The entry-side warped-shape measurement device 40 measures the entry-side warped shape of the metal strip 1 and acquires information specifying the distribution of the warp height in the width direction of the metal strip 1. The entry-side warped-shape measurement device 40 outputs the information specifying the distribution of the warp height in the width direction of the metal strip 1 to the warped-shape control device 50.

Upon acquiring the information specifying the distribution of the warp height in the width direction of the metal strip 1 from the entry-side warped-shape measurement device 40, the warped-shape control device 50 calculates an approximation curve for the entry-side warped shape using an approximation method selected from parabolic approximation, circular arc approximation, and envelope approximation. Then, based on the calculated approximation curve, the warped-shape control device 50 specifies the operating parameters of the temper rolling mill 31 that can reduce the warp height of the warped shape of the metal strip 1 downstream of the temper rolling mill 31 (hereinafter this warped shape will be referred to as the "exit-side warped shape"). The warped-shape control device 50 outputs the specified operating parameters of the temper rolling mill 31 to the control controller 18.

The control controller 18 is a dedicated computer for executing sequence control, such as a PLC (programmable logic controller). The control controller 18 sets the operating condition of the temper rolling system 30 including the temper rolling mill 31, and acquires sensor information from various sensors provided in the temper rolling system 30. The control controller 18 sets the operating condition of the rolling reduction device 34 in the temper rolling mill 31 so that the elongation percentage of the metal strip 1 after the temper rolling matches the target elongation percentage. Furthermore, upon acquiring the operating parameters of the temper rolling mill 31 from the warped-shape control device 50, the control controller 18 sets the operating condition of the temper rolling mill 31 based on the operating parameters.

The control computer 17 is a general-purpose computer, such as a workstation or a personal computer. The control computer 17 specifies various operating parameters of the temper rolling system 30, collects sensor information from the control controller 18, and acquires and stores various kinds of information about the actual operating performance of the metal strip 1. Additionally, the control computer 17 performs tracking of the weld between the preceding metal strip and the succeeding metal strip, which are connected by a welding machine or the like upstream of the temper rolling system 30, to specify the current position of the weld.

Next, warped shapes controlled by the metal-strip warped-shape control method according to the present embodiment will be described. As for the warped shapes of the metal strip 1, L-warping (longitudinal warping of the metal strip 1) and C-warping (widthwise warping of the metal strip 1) are known. Among them, C-warping is included, but L-warping is not included, in warped shapes controlled by the metal-strip warped-shape control method according to the present embodiment. L-warping is constrained by line tension applied when the metal strip 1 is continuously conveyed, and it is difficult to measure L-warping online. C-warping controlled by the metal-strip warped-shape control method according to the present embodiment includes not only C-warping, where the cross-sectional shape in the width direction of the metal strip 1 is approximated with a quadratic function or circular arc, but also warping with a W-shaped cross-section in the width direction, as well as warping approximated with a higher-order function of third degree or higher.

The warping in the width direction of the metal strip 1 occurs when in-plane stress generated in the width direction of the metal strip 1, due to the cooling step, etc., cannot be maintained within the plane and causes out-of-plane displacement due to buckling. In contrast, wavy shape defects occur when the elongation in the longitudinal direction of the metal strip 1 is distributed in the width direction, causing the in-plane stress generated in the longitudinal direction of the metal strip 1 to fail to be maintained within the plane, leading to out-of-plane displacement due to buckling. While both the warped shape in the width direction and the wavy shape are common in that they are out-of-plane deformations caused by buckling, they differ in that the direction of the stress causing the buckling is either in the width direction or the longitudinal direction.

Therefore, in the case of wavy shape, applying tension in the longitudinal direction of the metal strip 1 absorbs the elongation difference in the width direction (the difference in elongation in the width direction), causing the shape defect of the metal strip 1 to become latent (changing into an apparently flat shape). In contrast, in the case of warped shapes in the width direction, applying tension in the longitudinal direction of the metal strip 1 does not significantly affect the stress in the width direction. Therefore, applying tension in the longitudinal direction of the metal strip 1 does not change the warped shape in the width direction of the metal strip 1.

The contact-type shape meter disclosed in Patent Literature 2 applies high tension (e.g., 100 to 200 MPa) between the temper rolling mill and the exit-side bridle rolls to make the shape defects of the metal strip 1 latent and measure the contact load distribution in the width direction. That is, such a contact-type shape meter is used to measure the wavy shape of the metal strip 1, but it does not measure the warped shapes in the width direction. Additionally, there is a difference that, while wavy shape involves periodic changes of displacement in the height direction of the metal strip 1 relative to the longitudinal direction of the metal strip 1, warped shapes do not exhibit periodic displacement relative to the longitudinal direction of the metal strip 1. The period of the wavy shape of the metal strip 1 is often an interval of about 0.5 to 5 m in the longitudinal direction of the metal strip.

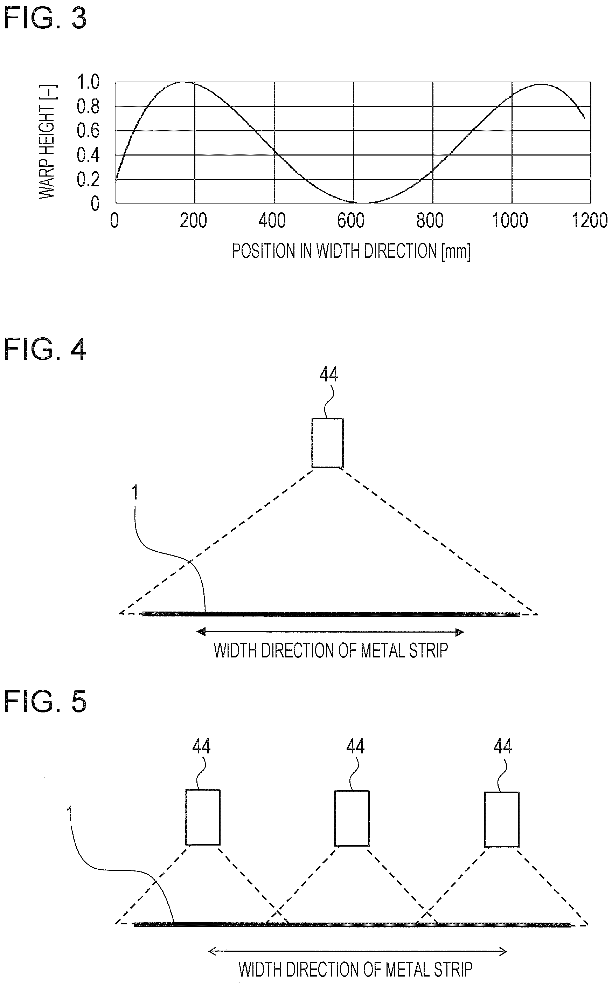

Fig. 3 is a schematic diagram illustrating an example of the warped shape in the width direction of the metal strip 1. The warped shape illustrated in Fig. 3 is an example of the warped shape measured after processing the metal strip, made of a high-strength steel sheet with a thickness of 1.2 mm and a width of 1200 mm, through the cooling step of water quenching and rolling with the temper rolling mill. Note that the warp height illustrated in Fig. 3 is standardized based on the maximum height in the width direction. As illustrated in Fig. 3, when the metal strip, made of high-strength steel sheet, is rapidly cooled by water quenching, the warped shape in the width direction becomes a warped shape approximated with a higher-order function.

The entry-side warped-shape measurement device 40 measures the entry-side warped shape of the metal strip 1 and acquires information specifying the distribution of the warp height in the width direction of the metal strip 1. The information specifying the distribution of the warp height in the width direction of the metal strip 1 is information indicating the distribution of the warp height at each position in the width direction of the metal strip 1, such as that illustrated in Fig. 3. The entry-side warped-shape measurement device 40 may approximate the curve representing the distribution of the warp height in the width direction using an arbitrary function and acquire the coefficients that define the approximated function as the information specifying the distribution of the warp height in the width direction of the metal strip 1. The entry-side warped-shape measurement device 40 may determine the distribution of the warp height at each position in the width direction of the metal strip 1 by averaging the warp height over a range of about 1 to 5 m in the longitudinal direction of the metal strip 1. By averaging the warp height in the longitudinal direction of the metal strip 1 over a range of about 1 to 5 m in this way, even if the metal strip 1 contains both the warped shape and wavy shape, the wavy shape can be excluded, allowing the warped shape to be specified.

The entry-side warped-shape measurement device 40, which can acquire the information specifying the distribution of the warp height at each position in the width direction of the metal strip 1, is, for example, a laser rangefinder. Multiple laser rangefinders, which are contactless rangefinders, may be arranged at different positions in the width direction of the conveyed metal strip 1, and the warp height at each position may be measured using these laser rangefinders. For example, when measuring the warp height of the metal strip 1 with a width of 800 to 1900 mm using laser rangefinders, it is preferable that the number of laser rangefinders arranged at different positions in the width direction be 3 or more and 100 or less. More preferably, the number of laser rangefinders is 10 to 20. Using fewer than three laser rangefinders makes it difficult to specify the warped shape in the width direction of the metal strip 1, which is not preferable. Using more than 100 laser rangefinders does not improve the accuracy of measuring the warped shape, and it increases equipment costs, which is not preferable.

Fig. 4 is a schematic diagram illustrating a state in which the warped shape of the metal strip 1 is measured using a laser-scanning-type laser rangefinder. As illustrated in Fig. 4, a laser-scanning-type laser rangefinder 44 may be used as the entry-side warped-shape measurement device 40. The laser-scanning-type laser rangefinder 44 scans with a laser beam in a fan shape to measure the distance to each position in the width direction of the metal strip 1 and calculates the height at each position in the width direction based on the measured distances. Using the laser-scanning-type laser rangefinder 44 makes it possible to scan with a laser beam along the width direction from above the conveyed metal strip 1 and measure the warp height in the width direction of the metal strip 1.

Fig. 5 is a schematic diagram illustrating a state in which the warped shape is measured using multiple laser-scanning-type laser rangefinders. As illustrated in Fig. 5, multiple laser-scanning-type laser rangefinder 44 may be used as the entry-side warped-shape measurement device 40. In this case, the multiple laser-scanning-type laser rangefinders 44 are arranged in the width direction of the metal strip 1 to measure the warp height in the width direction of the metal strip 1. This makes it possible to measure the entry-side warped shape in a shorter time than the device illustrated in Fig. 4.

Additionally, a device that measures the entry-side warped shape using the light section method may be used as the entry-side warped-shape measurement device 40. In the light section method, a laser beam that spreads in a fan shape is emitted toward the width direction from above the metal strip 1, and the reflected light from the metal strip 1 is received. The received reflected light is captured by an image sensor, which in turn performs image processing on the captured image to measure the warp height of the metal strip **1.** Devices that measure the entry-side warped shape using the light section method include, for example, the LJ-X8000 series from Keyence and Gocator from LMT Technologies.

The accuracy of measuring the warp height of the metal strip 1 using the entry-side warped-shape measurement device 40 is preferably 1 mm or less, and more preferably 0.5 mm or less. By using the entry-side warped-shape measurement device 40 with a measurement accuracy of 1 mm or less, even if the upper limit of the warp height of the metal strip 1 is set within a range of 5 to 10 mm, the warp height of the metal strip 1 can be controlled within that range.

The entry-side warped-shape measurement device 40 preferably measures the warp height of the metal strip 1 at an interval of 1 m or less in the longitudinal direction of the metal strip 1. The warp-height measurement frequency relative to the metal strip 1 which is continuously conveyed is preferably 10 Hz or higher, and more preferably 20 Hz or higher. For example, the metal strip 1 may be conveyed at a speed of 600 m/min or higher by exit-side equipment in the continuous annealing facility. Even when the metal strip 1 is conveyed at this line speed, if the warped-shape measurement frequency is 10 Hz or higher, the warped shape can be measured at an interval of 1 m or less in the longitudinal direction of the metal strip 1.

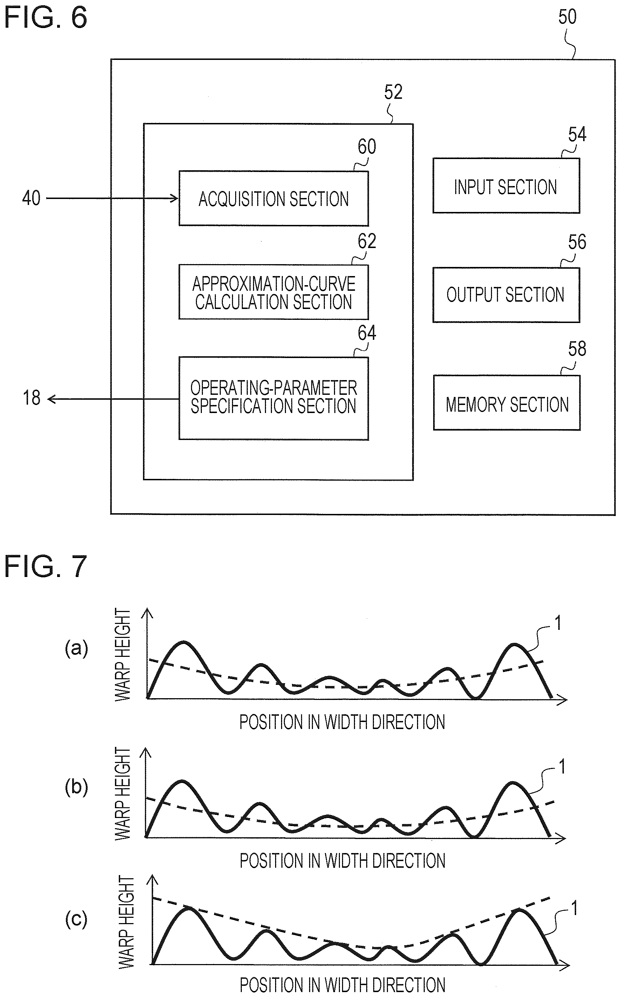

Next, the warped-shape control device 50 will be described. Fig. 6 is a schematic diagram illustrating an example of the configuration of the warped-shape control device 50. The warped-shape control device 50 is a general-purpose computer, such as a workstation or a personal computer. The warped-shape control device 50 includes a control section 52, an input section 54, an output section 56, and a memory section 58. The control section 52, which is a CPU or the like, executes a program read from the memory section 58, thereby causing the control section 52 to function as an acquisition section 60, an approximation-curve calculation section 62, and an operating-parameter specification section 64.

The input section 54 is, for example, a keyboard, a touchscreen integrally provided with a display, or the like. The output section 56 is, for example, an LCD, a CRT display, or the like. The memory section 58 includes updatable flash memory, a built-in hard disk or a hard disk connected by a data communication terminal, and an information recording medium such as a memory card, as well as their reading and writing devices. A program for the control section 52 to execute each function, and data used by the program are stored in the memory section 58.

Next, processes executed by the acquisition section 60, the approximation-curve calculation section 62, and the operating-parameter specification section 64 will be described. The acquisition section 60 acquires, as the entry-side warped shape of the metal strip 1, information specifying the distribution of the warp height in the width direction of the metal strip 1 from the entry-side warped-shape measurement device 40. The acquisition section 60 outputs the acquired information to the approximation-curve calculation section 62.

Upon acquiring the information specifying the distribution of the warp height in the width direction of the metal strip 1, the approximation-curve calculation section 62 approximates the distribution of the warp height in the width direction of the metal strip 1 using an approximation method selected from parabolic approximation, circular arc approximation, and envelope approximation.

By using parabolic approximation, circular arc approximation, or envelope approximation, the approximation-curve calculation section 62 can approximate the distribution of the warp height in the width direction of the metal strip 1 as a monotonic curve with a single inflection point relative to the position in the width direction of the metal strip 1. This results in an approximation curve representing the overall tendency of the warped shape in the width direction of the metal strip 1. The approximation curve need not be symmetric with respect to the center in the width direction of the metal strip 1, but is preferably a monotonic curve with an inflection point at the center position in the width direction of the metal strip 1.

Fig. 7 includes graphs each illustrating an approximation curve that approximates the distribution of the warp height in the width direction of the metal strip 1. In Figs. 7(a) to (c), the distribution of the warp height in the width direction of the metal strip 1 is indicated with a solid line, while the approximation curve approximating the distribution is indicated with a dashed line. Note that, in Fig. 7, to facilitate understanding of the description of the approximation curves, the horizontal axis representing the position in the width direction is compressed horizontally relative to the actual dimension, while the vertical axis representing the warp height is enlarged vertically relative to the actual dimension. Therefore, Fig. 7 does not illustrate the actual distribution of the warp height in the width direction of the metal strip 1, but instead illustrates the distribution of the warp height exaggerated and made higher than the actual warp height.

Fig. 7(a) is a graph illustrating an approximation curve that approximates the distribution of the warp height in the width direction of the metal strip 1, approximated using parabolic (quadratic curve) approximation. Parabolic approximation is an approximation method that approximates the distribution of the warp height using a quadratic curve with respect to a coordinate system composed of the position and warp height in the width direction of the metal strip 1. The approximation curve determined through parabolic approximation can be determined by applying a known method such as the least squares method.

Fig. 7(b) is a graph illustrating an approximation curve that approximates the distribution of the warp height in the width direction of the metal strip 1, approximated using circular arc approximation. Circular arc approximation is an approximation method that approximates the distribution of the warp height using a circular curve with respect to a coordinate system composed of the position and warp height in the width direction of the metal strip 1. The approximation curve determined through circular approximation can also be determined by applying a known method such as the least squares method.

Fig. 7(c) is a graph illustrating an approximation curve that approximates the distribution of the warp height in the width direction of the metal strip 1, approximated using envelope approximation. In general, an envelope refers to a curve that is tangent to all curves in a family of curves. Warped shapes controlled by the metal-strip warped-shape control method according to the present embodiment include multiple curves for which the distribution of the warp height of the metal strip 1 can be approximated by a higher-order function; thus, the envelope will be a curve that is tangent to all of these multiple curves. Specifically, the envelope approximation curve will be a curve that is tangent to all the peaks representing the warp height in the width direction of the metal strip 1.

As illustrated in Figs. 7(a) to (c), even by using any approximation method among parabolic approximation, circular arc approximation, and envelope approximation, the approximated approximation curve will be a monotonic curve that represents the overall tendency of the warped shape in the width direction of the metal strip 1. Therefore, even in cases where the distribution of the warp height in the width direction of the metal strip 1 becomes a higher-degree curve of third degree or higher, such as a W-shape, calculating the approximation curve will allow for easy determination of areas with high warp height and areas with low warp height in the metal strip 1. In other words, when the approximation curve has a convex downward shape, it indicates that the warp height at the edge portions of the width is relatively higher compared to the center portion of the width. When the approximation curve has a convex upward shape, it indicates that the warp height at the edge portions of the width is relatively lower compared to the center portion of the width. By calculating the approximation curve in this way, the overall tendency of the warped shape can be easily determined. By using this approximation curve, the operating parameters of the temper rolling mill 31 that can reduce the exit-side warped shape of the metal strip 1 downstream of the temper rolling mill 31 can be easily specified.

Now, reference to Fig. 6 is made again. Upon calculating the approximation curve using the above-described method, the approximation-curve calculation section 62 outputs the approximation curve to the operating-parameter specification section 64. The operating-parameter specification section 64 specifies the operating parameters of the temper rolling mill 31 that can reduce the warp height of the exit-side warped shape. The operating parameters of the temper rolling mill 31 are setting values for the operating condition that affects the warped shape of the metal strip 1, among the operating conditions of the temper rolling mill 31.

The operating-parameter specification section 64 specifies, as the operating parameters of the temper rolling mill 31, setting values for the bending force of a work roll bender, which is a shape control actuator of the temper rolling mill 31. The work roll bender is a shape control actuator that applies a bending force to the work rolls 32a and 32b to adjust the deflection of the work rolls 32a and 32b. By adjusting the deflection of the work rolls 32a and 32b using the work roll bender, a distribution of rolling load in the width direction of the metal strip 1 is formed on the work rolls 32a and 32b. By temper rolling the metal strip 1 with the work rolls 32a and 32b, which have this distribution of rolling load formed, the wavy shape of the metal strip 1 after temper rolling is corrected.

The inventors have discovered that, as in the case of the wavy shape, by temper rolling the metal strip 1 with the work rolls 32a and 32b, which have a distribution of rolling load formed, the warped shape in the width direction of the metal strip 1 can also be corrected.

Specifically, the inventors have discovered that the warp height in the width direction of the metal strip 1 can be reduced by adjusting the bending force of the work roll bender to increase the rolling load at positions where the warp height in the width direction of the metal strip 1 is high.

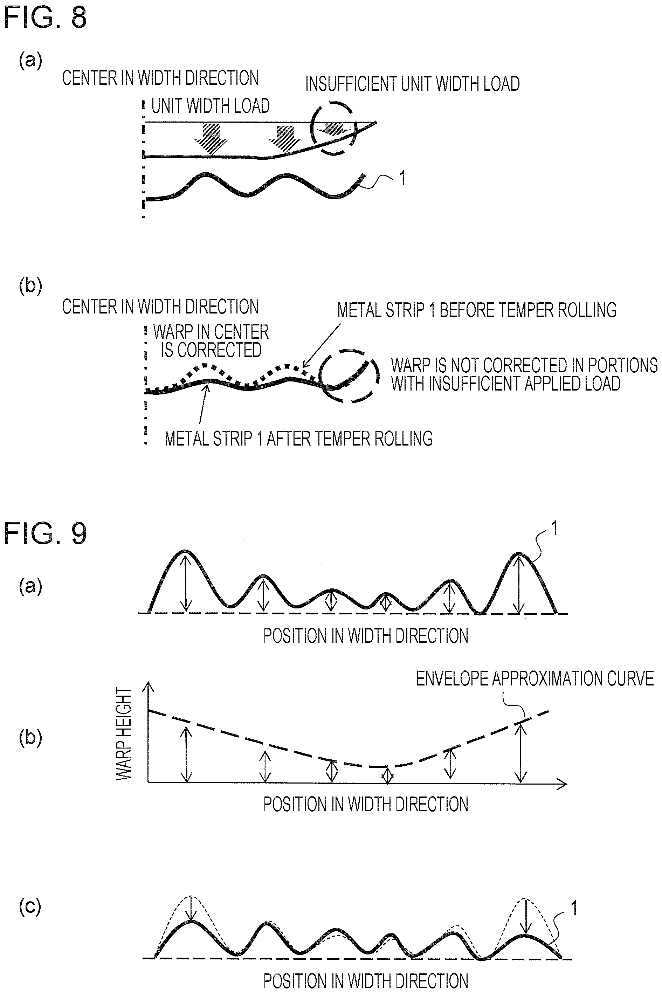

Fig. 8 includes schematic diagrams each illustrating a state in which the warping in the width direction of the metal strip 1 is corrected by temper rolling. Also in Fig. 8, the warp height in the width direction of the metal strip 1 is made higher than the actual warp height in order to explain the effect of the work roll bender. Fig. 8(a) is a schematic diagram illustrating the state of the metal strip 1, with a warp with approximately uniform amplitude in the width direction formed, before temper rolling. When a specific bending force is set and deflection occurs in the work roll 32a, a distribution of unit width load (the rolling load applied per unit width of the metal strip 1) is generated in the width direction of the metal strip 1 on the work roll 32a. For example, in the work roll 32a illustrated in Fig. 8(a), the unit width load near the edge portions of the width of the metal strip 1 is smaller compared to that in the center portion of the width.

Fig. 8(b) is a schematic diagram illustrating the state of the metal strip 1, with a warp with approximately uniform amplitude in the width direction formed, after temper rolling. When the metal strip 1 is temper rolled with work rolls exhibiting such a distribution of unit width load, as illustrated in Fig. 8(b), the warp height can be reduced in the center portion of the width where the unit width load is high, but the warp height cannot be reduced near the edge portions of the width where the unit width load is low.

This is likely because, within the roll bite, the curved portions in the width direction are constrained by the work rolls, causing bending stress to be generated within the metal strip 1 to flatten the curvature in the width direction. However, the bending stress generated internally is influenced by the unit width load, leading to a relative decrease in bending stress near the edge portions of the width. Consequently, the warp height near the edge portions of the width is not reduced.

Fig. 9 includes diagrams each describing a method for setting setting values for the bending force of the work roll bender of the temper rolling mill 31. Fig. 9(a) is a schematic diagram illustrating the distribution of the warp height in the width direction of the metal strip 1, acquired from the entry-side warped-shape measurement device 40. Fig. 9(b) is a diagram illustrating the envelope approximation curve of the entry-side warped shape calculated by the approximation-curve calculation section 62.

The approximation-curve calculation section 62 transforms the warped shape in the width direction represented by a higher-degree curve as illustrated in Fig. 9(a) into a smooth approximation curve as illustrated in Fig. 9(b). This makes it clear that the warped shape in the width direction, illustrated in Fig. 9(a), has a higher warp height near the edge portions of the width than in the center portion of the width overall.

The operating-parameter specification section 64 specifies setting values for the bending force of the work roll bender based on the approximation curve calculated by the approximation-curve calculation section 62. Specifically, the operating-parameter specification section 64 sets setting values for the bending force of the work roll bender that increases the rolling load of the work rolls near the edge portions of the width, where the warp height is high, and reduces the rolling load of the work rolls in the center portion of the width, where the warp height is low. In this manner, the operating-parameter specification section 64 specifies setting values for the bending force of the work roll bender in association with the overall tendency of the warped shape specified by the approximation curve.

Fig. 9(c) is a schematic diagram illustrating the warped shape in the width direction of the metal strip 1, which has been temper rolled by the temper rolling mill after reflecting the setting values for the bending force specified by the operating-parameter specification section 64. As illustrated in Fig. 9(c), by temper rolling the metal strip 1 with the temper rolling mill 31 where the setting values for the bending force of the work roll bender has been reflected, temper rolling can be performed with a rolling load according to the warp height in the width direction of the metal strip 1, leading to a significant decrease in warp height near the edge portions where the warp height is high.

Note that the operating parameters specified by the operating-parameter specification section 64 are not limited to the bending force of the work roll bender; the operating parameters of other shape control actuators that can control the deflection deformation of the work rolls or the distribution of the roll gap in the width direction may also be specified. For example, the hydraulic force of variable crown rolls that can adjust the roll crown by hydraulic force, the roll shift amount for axially shifting the work rolls and intermediate rolls, and the pressing force of each segment of segmented backup rolls can be specified as operating parameters of shape control actuators capable of changing the distribution of the roll gap in the width direction of the metal strip 1 into a smooth curve.

The operating-parameter specification section 64 outputs the specified operating parameters to the control controller 18. The control controller 18 sets the acquired operating parameters to the operating condition of the temper rolling mill 31. In this manner, the operating parameters specified by the operating-parameter specification section 64 is set to the temper rolling mill 31. Then, by temper rolling the metal strip 1 using the temper rolling mill 31 where the parameter has been set to the operating condition, the warped shape in the width direction of the metal strip 1 is controlled, achieving the manufacture of the metal strip 1 with reduced warp height in the width direction downstream of the temper rolling mill 31.

The metal-strip warped-shape control method according to the first embodiment performs feedforward control using the entry-side warped shape. By performing feedforward control, the warp height of the exit-side warped shape of the metal strip 1 can be rapidly controlled to be reduced.

Although the entry-side warped shape of the metal strip 1 changes due to temper rolling by the temper rolling mill 31, if the elongation percentage imparted to the metal strip 1 by the temper rolling mill 31 is small, the warped shape of the metal strip 1 does not change significantly before and after temper rolling. In such a case, even if the metal strip 1 is temper rolled, the overall warp tendency of the entry-side warped shape of the metal strip 1 does not change; thus, based on the approximation curve of the entry-side warped shape, the operating parameters of the temper rolling mill 31 that can reduce the warp height of the exit-side warped shape can be specified.

In contrast, if the elongation percentage imparted to the metal strip 1 by the temper rolling mill 31 is large, the overall warp tendency of the warped shape of the metal strip 1 may change before and after temper rolling. Therefore, even if the operating parameters are specified based on the approximation curve of the entry-side warped shape and temper rolling is performed using the temper rolling mill 31 where the operating parameters have been reflected, the overall warp tendency of the warped shape of the metal strip 1 may change, which may in turn increase the warped shape. Therefore, if the elongation percentage imparted to the metal strip 1 by the temper rolling mill 31 is large, it is not preferable to apply the first embodiment in which the operating parameters of the temper rolling mill are set based on the entry-side warped shape. The first embodiment is preferably applied when the elongation percentage imparted to the metal strip 1 by the temper rolling mill 31 is less than or equal to 0.3%.

Additionally, it is preferable that the control controller 18 be able to set the operating parameter(s) of the temper rolling mill 31 during the manufacture of the metal strip 1. Specifically, during the manufacture of the metal strip 1, it is preferable to measure the warped shape of the metal strip 1 using the entry-side warped-shape measurement device 40 as needed, calculate an approximation curve for the entry-side warped shape using the warped-shape control device 50, output setting values for the operating parameters of the temper rolling system 30 that can reduce the warp height of the exit-side warped shape to the control controller 18, and set and update them as needed. In this case, the control controller 18, using the tracking information of the weld generated by the control computer 17 and the line speed of the metal strip 1, calculates the time at which the position of the warped shape measured by the entry-side warped-shape measurement device 40 reaches the temper rolling mill 31. Then, at the timing when the position of the warped shape measured by the entry-side warped-shape measurement device 40 reaches the temper rolling mill 31, the control controller 18 changes the manufacturing condition to the operating parameters of the temper rolling system 30 set by the operating-parameter specification section 55. This enables the reduction of the warp height of the exit-side warp of the metal strip 1 across the longitudinal direction of the metal strip 1.

<Second Embodiment>

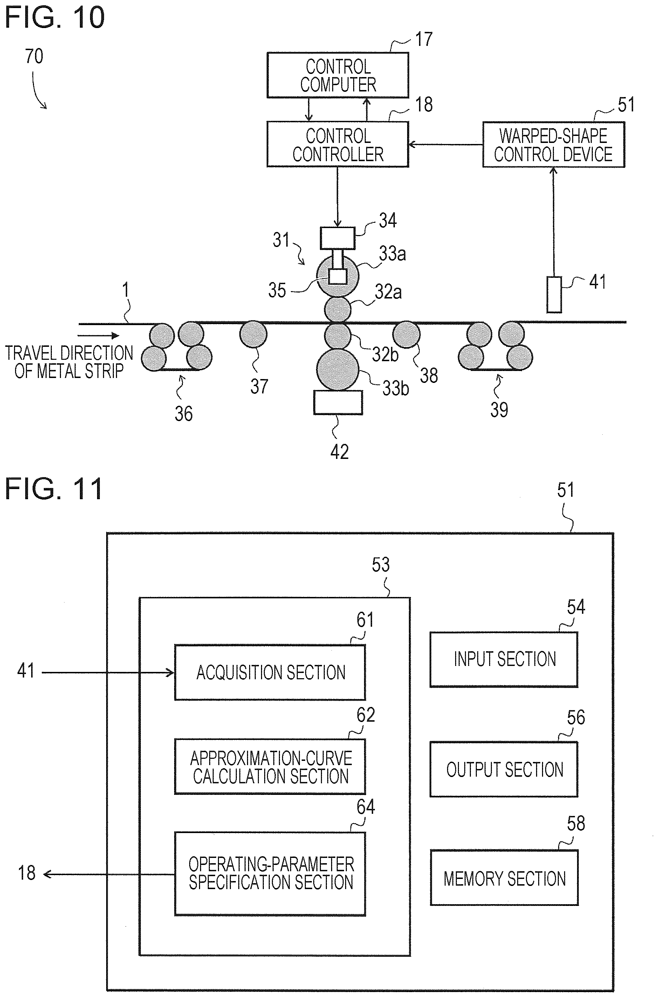

Fig. 10 is a schematic diagram illustrating temper rolling system 70, which is an example of a metal-strip manufacturing facility capable of implementing a metal-strip warped-shape control method according to a second embodiment. In the temper rolling system 70 illustrated in Fig. 10, the same configurations as those in the temper rolling system 30 illustrated in Fig. 1 are assigned the same reference numerals, and their descriptions are omitted. The temper rolling system 70 is different from the temper rolling system 30 illustrated in Fig. 1 in that the temper rolling system 70 includes an exit-side warped-shape measurement device 41 instead of the entry-side warped-shape measurement device 40, and includes a warped-shape control device 51 instead of the warped-shape control device 50.

The exit-side warped-shape measurement device 41, which measures the exit-side warped shape of the metal strip 1, is provided downstream of the temper rolling mill 31. The exit-side warped-shape measurement device 41 measures the exit-side warped shape of the metal strip 1 and acquires information specifying the distribution of the warp height in the width direction of the metal strip 1. The exit-side warped-shape measurement device 41, which may be the same as the entry-side warped-shape measurement device 40, is, for example, a laser rangefinder, a laser-scanning-type laser rangefinder, or a warped-shape measurement device using the light section method. The exit-side warped-shape measurement device 41 outputs the information specifying the distribution of the warp height in the width direction of the metal strip 1 to the warped-shape control device 51.

Upon acquiring the information specifying the distribution of the warp height in the width direction of the metal strip 1 from the exit-side warped-shape measurement device 41, the warped-shape control device 51 calculates an approximation curve for the exit-side warped shape. Based on the calculated approximation curve, the warped-shape control device 51 specifies the operating parameters of the temper rolling mill 31 that can reduce the warp height of the exit-side warped shape. The warped-shape control device 51 outputs the specified operating parameters of the temper rolling mill 31 to the control controller 18.

Fig. 11 is a schematic diagram illustrating the configuration of the warped-shape control device 51. In the warped-shape control device 51 illustrated in Fig. 11, the same configurations as those in the warped-shape control device 50 illustrated in Fig. 6 are assigned the same reference numerals, and their descriptions are omitted.

The warped-shape control device 51 is also a general-purpose computer, such as a workstation or a personal computer. The warped-shape control device 51 includes a control section 53, the input section 54, the output section 56, and the memory section 58. The control section 53, which is a CPU or the like, executes a program read from the memory section 58, thereby causing the control section 53 to function as an acquisition section 61, the approximation-curve calculation section 62, and the operating-parameter specification section 64.

Next, a process executed by the acquisition section 61 will be described. The acquisition section 61 acquires, as the exit-side warped shape of the metal strip 1, information specifying the distribution of the warp height in the width direction of the metal strip 1 from the exit-side warped-shape measurement device 41. The acquisition section 61 outputs the acquired information to the approximation-curve calculation section 62. Processes executed by the approximation-curve calculation section 62 and the operating-parameter specification section 64 are the same as those in the first embodiment.

The operating-parameter specification section 64 outputs the specified operating parameters to the control controller 18. The control controller 18 sets the acquired operating parameters to the operating condition of the temper rolling mill 31. In this manner, the operating parameters specified by the operating-parameter specification section 64 are set to the temper rolling mill 31. Then, by temper rolling the metal strip 1 using the temper rolling mill 31 where the parameter has been set, the warped shape in the width direction is controlled, achieving the manufacture of the metal strip 1 with reduced warp height in the width direction downstream of the temper rolling mill 31.

The metal-strip warped-shape control method according to the second embodiment performs feedback control using the exit-side warped shape. Feedback control wastes time between measuring the warped shape of the metal strip 1 and setting the operating condition of the temper rolling mill 31. Therefore, the responsiveness of the metal-strip warped-shape control method according to the second embodiment is inferior to that of the first embodiment. In contrast, in feedback control, the exit-side warped shape, which is the control target, is measured using the exit-side warped-shape measurement device 41. Therefore, the metal-strip warped-shape control method according to the second embodiment is applicable to the manufacturing facility for the metal strip 1, including the temper rolling mill 31, regardless of the elongation percentage imparted to the metal strip 1 by the temper rolling mill 31.

<Third Embodiment>

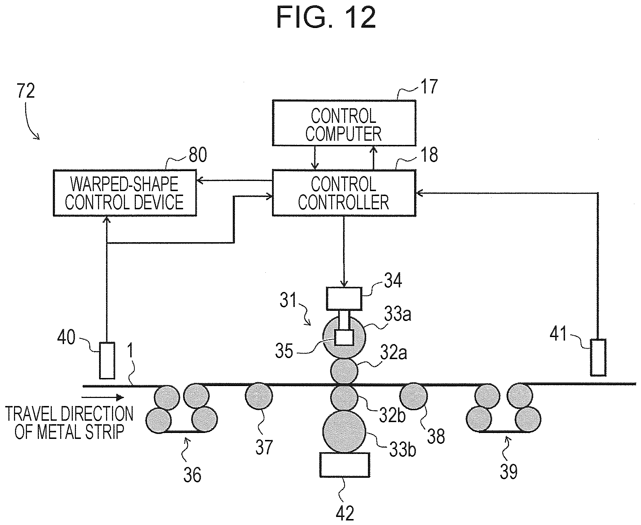

Fig. 12 is a schematic diagram illustrating temper rolling system 72, which is an example of a metal-strip manufacturing facility capable of implementing a metal-strip warped-shape control method according to a third embodiment. In the temper rolling system 72 illustrated in Fig. 12, the same configurations as those in the temper rolling system 30 illustrated in Fig. 1 or the temper rolling system 70 illustrated in Fig. 10 are assigned the same reference numerals, and their descriptions are omitted.

The temper rolling system 72 illustrated in Fig. 12 differs from the temper rolling system 30 illustrated in Fig. 1 in that the temper rolling system 72 includes the exit-side warped-shape measurement device 41, and includes a warped-shape control device 80 instead of the warped-shape control device 50. Note that the exit-side warped-shape measurement device 41 is the same as the exit-side warped-shape measurement device 41 in the temper rolling system 70 illustrated in Fig. 10.

The entry-side warped-shape measurement device 40, which measures the entry-side warped shape of the metal strip 1, is provided upstream of the temper rolling mill 31. The exit-side warped-shape measurement device 41, which measures the exit-side warped shape of the metal strip 1, is provided downstream of the temper rolling mill 31. The entry-side warped-shape measurement device 40 measures the entry-side warped shape of the metal strip 1 and acquires information specifying the distribution of the warp height in the width direction of the metal strip 1. The entry-side warped-shape measurement device 40 outputs the acquired information specifying the distribution of the warp height in the width direction of the metal strip 1 to the warped-shape control device 80 and the control controller 18.

The exit-side warped-shape measurement device 41 measures the exit-side warped shape of the metal strip 1 and acquires information specifying the distribution of the warp height in the width direction of the metal strip 1. The exit-side warped-shape measurement device 41 outputs the information specifying the distribution of the warp height in the width direction of the metal strip 1 to the control controller 18. The control computer 17 acquires and stores sensor information, including the entry-side warped shape and the exit-side warped shape acquired by the control controller 18, as information about the actual operating performance of the metal strip 1.

The warped-shape control device 80 acquires the information specifying the distribution of the warp height in the width direction of the metal strip 1 from the entry-side warped-shape measurement device 40. Additionally, the warped-shape control device 80 acquires at least one of the operating parameters of the temper rolling mill 31 from the control computer 17 through the control controller 18. The operating parameters of the temper rolling mill 31 are setting values for the operating conditions that affect the warped shape of the metal strip 1, among the operating conditions of the temper rolling mill 31. The warped-shape control device 80 predicts the exit-side warped shape using a warped-shape prediction model that receives input data including the entry-side warped shape and at least one of the operating parameters, and outputs the exit-side warped shape.

The warped-shape control device 80 calculates an approximation curve for the predicted exit-side warped shape. Based on the calculated approximation curve, the warped-shape control device 80 specifies the operating parameters of the temper rolling mill 31 that can reduce the warp height of the exit-side warped shape. The warped-shape control device 80 outputs the set operating parameters of the temper rolling mill 31 to the control controller 18.

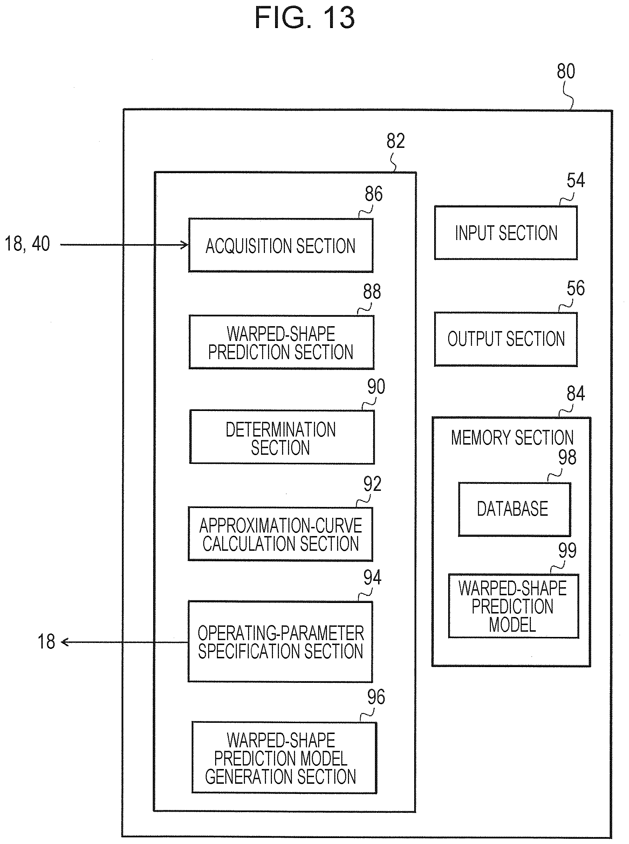

Fig. 13 is a schematic diagram illustrating the configuration of the warped-shape control device 80. In the warped-shape control device 80, the same configurations as those in the warped-shape control device 50 illustrated in Fig. 6 are assigned the same reference numerals, and their descriptions are omitted.

The warped-shape control device 80 is also a general-purpose computer, such as a workstation or a personal computer. The warped-shape control device 80 includes a control section 82, the input section 54, the output section 56, and a memory section 84. The control section 82, which is a CPU or the like, executes a program read from the memory section 84, thereby causing the control section 82 to function as an acquisition section 86, a warped-shape prediction section 88, a determination section 90, an approximation-curve calculation section 92, an operating-parameter specification section 94, and a warped-shape prediction model generation section 96. The memory section 84 includes, for example, updatable flash memory, a built-in hard disk or a hard disk connected by a data communication terminal, and an information recording medium such as a memory card, as well as their reading and writing devices. A program for the control section 82 to execute each function, and data used by the program are stored in the memory section 84.

The memory section 84 further stores a database 98 and a warped-shape prediction model 99. The database 98 stores datasets, each of which includes a set of the measured values of the entry-side warped shape and exit-side warped shape of the metal strip 1 manufactured in the past by the temper rolling system 72, along with at least one of the operating parameters. These measured values and operating parameters are collected and stored in the control computer 17, and are acquired from the control computer 17 through the control controller 18. The warped-shape prediction model 99 is created in advance by the warped-shape prediction model generation section 96 and stored in the memory section 84.

The warped-shape prediction model 99 is, for example, a trained machine learning model that receives input data including the entry-side warped shape and at least one of the operating parameters, and outputs the exit-side warped shape. In the case where the entry-side warped shape is information specifying the distribution of the warp height in the width direction of the metal strip 1, input data supplied to the learning model includes the warp height value at each position in the width direction, along with at least one of the operating parameters. Additionally, in the case where the entry-side warped shape is a function that approximates the distribution of the warp height in the width direction of the metal strip 1, input data supplied to the learning model includes coefficients that define the function, along with at least one of the operating parameters.

In addition, in the case of outputting information specifying the distribution of the warp height in the width direction of the metal strip 1 as the exit-side warped shape, a warped-shape prediction model that outputs the warp height at each position in the width direction is pre-created as the warped-shape prediction model. Furthermore, in the case of outputting a function that approximates the warp height in the width direction of the metal strip 1 as the exit-side warped shape, a shape prediction model that outputs coefficients that define the function is pre-created as the warped-shape prediction model.

Next, processes executed by the acquisition section 86, the warped-shape prediction section 88, the determination section 90, the approximation-curve calculation section 92, the operating-parameter specification section 94, and the warped-shape prediction model generation section 96 will be described. The acquisition section 86 acquires, as the entry-side warped shape of the metal strip 1, information specifying the distribution of the warp height of the entry-side warped shape in the width direction from the entry-side warped-shape measurement device 40. Additionally, the acquisition section 86 acquires at least one of operating parameters of the temper rolling mill 31 from the control computer 17 through the control controller 18. The acquisition section 86 outputs the entry-side warped shape and at least one of the operating parameters to the warped-shape prediction section 88.

Upon acquiring the entry-side warped shape and at least one of the operating parameters, the warped-shape prediction section 88 reads a warped-shape prediction model from the memory section 84, inputs the entry-side warped shape and at least one of the operating parameters to this warped-shape prediction model, and causes the warped-shape prediction model to output an exit-side warped shape. In this manner, the warped-shape prediction section 88 predicts the exit-side warped shape.

The warped-shape prediction section 88 outputs the predicted exit-side warped shape to the determination section 90. The determination section 90 determines whether the predicted exit-side warped shape is less than or equal to a preset reference value (target warp value). The reference value may be acquired from the control computer 17 through the acquisition section 86 and the control controller 18; alternatively, the reference value may be stored in advance in the memory section 84, and the reference value may be read from the memory section 84. In the case where it is determined that the exit-side warped shape predicted by the warped-shape prediction section 88 exceeds the reference value, the determination section 90 outputs the predicted exit-side warped shape to the approximation-curve calculation section 92.

In contrast, in the case where it is determined that the exit-side warped shape predicted by the warped-shape prediction section 88 does not exceed the reference value, the determination section 90 discards the predicted exit-side warped shape, without outputting it to the approximation-curve calculation section 92. By the determination section 90 discarding the exit-side warped shape in this way, the current operating condition of the temper rolling mill 31 is maintained

Upon acquiring the predicted exit-side warped shape from the determination section 90, the approximation-curve calculation section 92 calculates an approximation curve that approximates the predicted exit-side warped shape using parabolic approximation, circular arc approximation, or envelope approximation. The approximation-curve calculation section 92 outputs the calculated approximation curve to the operating-parameter specification section 94. The operating-parameter specification section 94 specifies the operating parameters of the temper rolling mill 31 that can reduce the warp height of the predicted exit-side warped shape. The method for calculating the approximation curve by the approximation-curve calculation section 92 and the method for specifying the operating parameters of the temper rolling mill 31 by the operating-parameter specification section 94 are the same as those in the first embodiment.

The operating-parameter specification section 94 outputs the specified operating parameters to the control controller 18. Using the acquired operating parameters, the control controller 18 changes the operating condition of the temper rolling mill 31. In this way, the operating parameters specified by the operating-parameter specification section 94 is reflected in the operating condition of the temper rolling mill 31. Then, by temper rolling the metal strip 1 using this temper rolling mill 31, the warped shape in the width direction of the metal strip 1 is controlled, achieving the manufacture of the metal strip with reduced warp height in the width direction downstream of the temper rolling mill 31.

In the metal-strip warped-shape control method according to the third embodiment, the exit-side warped shape, which is the control target, is predicted using the entry-side warped shape, and setting values for the operating parameters of the temper rolling mill 31 that can reduce the warp height of the exit-side warped shape is specified. Therefore, the metal-strip warped-shape control method according to the third embodiment is applicable to the manufacturing facility for the metal strip 1, including the temper rolling mill 31, regardless of the elongation percentage imparted by the temper rolling mill 31. Additionally, since setting values for the operating parameters of the temper rolling mill 31 are specified at the timing when the entry-side warped shape and at least one of the operating parameters of the temper rolling mill 31 are acquired, no wasted time occurs as in the second embodiment. Therefore, the region of the metal strip 1 where the exit-side warped shape is uncontrolled and becomes improper is shorter than that in the second embodiment.

Although the third embodiment has discussed an example in which the warped-shape control device 80 includes the determination section 90, the warped-shape control device 80 need not include the determination section 90. In this case, the warped-shape prediction section 88 outputs the predicted exit-side warped shape to the approximation-curve calculation section 92. The approximation-curve calculation section 92 calculates an approximation curve for the exit-side warped shape, and the operating-parameter specification section 94, based on the calculated approximation curve, specifies the operating parameters that can reduce the warp height. Using the specified operating parameters, the operating condition of the temper rolling mill 31 is changed, achieving the manufacture of a metal strip with reduced warp height in the width direction downstream of the temper rolling mill 31. In this way, even in the absence of the determination section 90, the manufacture of a metal strip with reduced warp height in the width direction downstream of the temper rolling mill 31 can be achieved, similar to the case where the determination section 90 is included.

Next, a method for generating a warped-shape prediction model by the warped-shape prediction model generation section 96 will be described. In the present embodiment, using the entry-side warped-shape measurement device 40, which measures the entry-side warped shape upstream of the temper rolling mill 31, and the exit-side warped-shape measurement device 41, which measures the exit-side warped shape downstream of the temper rolling mill 31, the actual data of the entry-side warped shape and the exit-side warped shape is acquired. Since the control computer 17 generates tracking information of the weld of the metal strip 1, the control computer 17, using information about the line speed of the metal strip 1 and the tracking information, acquires the entry-side warped shape and the exit-side warped shape in association with the distance from the leading-end weld of the metal strip 1, and stores them. At that time, since the temper rolling mill 31 imparts elongation to the metal strip 1, it is preferable to correct the position from the leading-end weld, measured by the exit-side warped-shape measurement device 41, according to the elongation percentage of the temper rolling mill 31. Furthermore, the control computer 17 acquires the operating parameters of the temper rolling mill 31 in association with the distance from the leading-end weld of the metal strip 1, and stores them.

The acquisition section 86 acquires datasets from the control computer 17 through the control controller 18. Each dataset includes a set of the measured values of the entry-side warped shape and exit-side warped shape at a position equidistant from the leading-end weld of the metal strip 1 are the same, along with at least one of the operating parameters of the temper rolling mill 31 when this position passes through the temper rolling mill 31. The acquisition section 86 stores the acquired datasets in the database 98 in the memory section 84. The database 98 preferably stores 200 or more datasets, and more preferably stores 1000 or more datasets.

Additionally, the acquisition section 86 preferably acquires the above-mentioned datasets from the leading end portion (such as within 20 m from the leading-end weld), the steady-state portion, and the trailing end portion (such as within 20 m from the trailing-end weld) of the metal strip 1. In metal products, whether a product can be shipped is conventionally determined by inspections conducted on the leading end portion, the steady-state portion, and the trailing end portion. Therefore, it is preferably to acquire datasets for the leading end portion, the steady-state portion, and the trailing end portion in order to cope with the inspections.

Furthermore, the acquisition section 86 preferably acquires datasets over the entire length of the metal strip 1 at a predetermined interval, from the leading end portion to the trailing end portion of the metal strip 1. The interval at which the datasets are acquired is preferably set within a range from 5 m to 20 m inclusive. In this way, by storing the datasets over the entire length of the metal strip 1 in the database 98 and creating a warped-shape prediction model using these datasets, the exit-side warped shape can be predicted with high accuracy. Additionally, the acquisition section 86 may update the datasets stored in the database 98 as needed, with the total number of datasets limited to a certain maximum.

Using the datasets stored in the database 98, the warped-shape prediction model generation section 96 generates a warped-shape prediction model that receives input data including the entry-side warped shape and at least one of the operating parameters, and outputs the exit-side warped shape. When the warped-shape prediction model is a trained machine learning model, the warped-shape prediction model generation section 96 trains the machine learning model using the datasets stored in the database 98 as training data, thereby generating the trained machine learning model. As for the machine learning model, commonly employed methods such as neural networks (including deep learning and convolutional neural networks), decision tree learning, random forests, or support vector regression may be used. It is also acceptable to use an ensemble model combining multiple models.

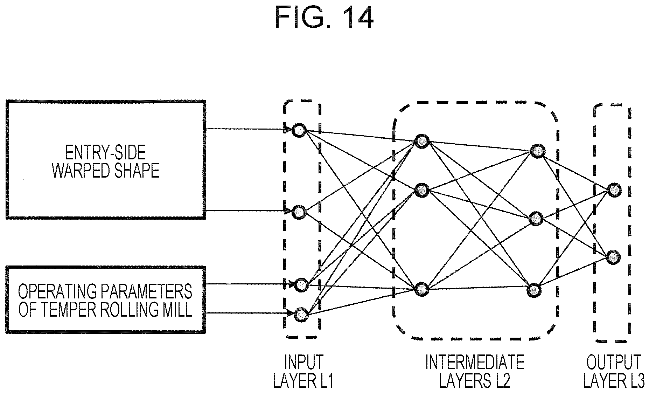

Fig. 14 is a diagram illustrating an example of a machine learning model using a neural network. The warped-shape prediction model can be generated using a machine learning model that employs a general neural network as illustrated in Fig. 14, for example. L1, L2, and L3 in Fig. 14 indicate the input layer, intermediate layers, and output layer, respectively. Particularly, by using deep learning with a multi-layer neural network, other operating parameters that are correlated with the warped shape of the metal strip 1 can be freely selected as input without considering the problem of multicollinearity, thereby improving the accuracy of predicting the exit-side warped shape of the metal strip 1. As illustrated in Fig. 14, as a neural network, a neural network with two to three intermediate layers and 18 to 512 nodes each can be used, with a sigmoid function used as the activation function. The number of nodes in the output layer simply needs to be set to match the number of numerical values output by the warped-shape prediction model. For example, in the case where the warped-shape prediction model outputs the warp height at each position in the width direction, then the number of nodes in the output layer simply needs to correspond to the number of positions in the width direction at which the warp heights are specified. Alternatively, in the case where the warped-shape prediction model outputs a function that approximates the warp height, then the number of nodes in the output layer simply needs to correspond to the number of coefficients for defining that function.

In addition, machine learning may be performed using the datasets stored in the database 98, which are divided into training data and test data. By dividing the datasets into training data and test data in this way, the warped-shape prediction model generation section 96 can conduct the learning of the weight coefficients of the neural network using the training data, as well as generating the warped-shape prediction model by modifying the structure of the neural network (the number of intermediate layers and nodes) to achieve a high accuracy rate for the exit-side warped shape using the test data. By generating the warped-shape prediction model in this way, the accuracy of the warped-shape prediction model 99 in estimating the exit-side warped shape can be improved.

Furthermore, the weight coefficients of the warped-shape prediction model 99 may be updated. To update the weight coefficients, the propagation method may be used. Additionally, the warped-shape prediction model 99 may be updated to a new warped-shape prediction model by conducting the learning again every sixth months or every year, for example. By updating the warped-shape prediction model using datasets including the latest data, even if the state of the temper rolling mill 31 changes over time, the latest state can be reflected in the warped-shape prediction model.

Note that, in the first to third embodiments, examples where the warped-shape control device 50 (51, 80), the control controller 18, and the control computer 17 are separate devices have been discussed; however, these are not the only possible examples.

The control controller 18 and the control computer 17 may be a single device, or the control controller 18 and the warped-shape control device 50 (51, 80) may be a single device. Furthermore, the warped-shape control device 50 (51, 80), the control controller 18, and the control computer 17 may be a single device.

Additionally, as described above, the metal-strip warped-shape control method according to the present embodiment can reduce the warp height of warped shapes with a W-shaped cross-section in the width direction of the metal strip and warped shapes approximated with higher-order functions. The warped shapes with a W-shaped cross-section in the width direction and the warped shapes approximated with higher-order functions tend to occur in high-strength steel sheets after quenching. Therefore, it is preferable to apply the metal-strip warped-shape control method according to the present embodiment to the manufacture of metal strips where the tensile strength is 980 MPa or higher.

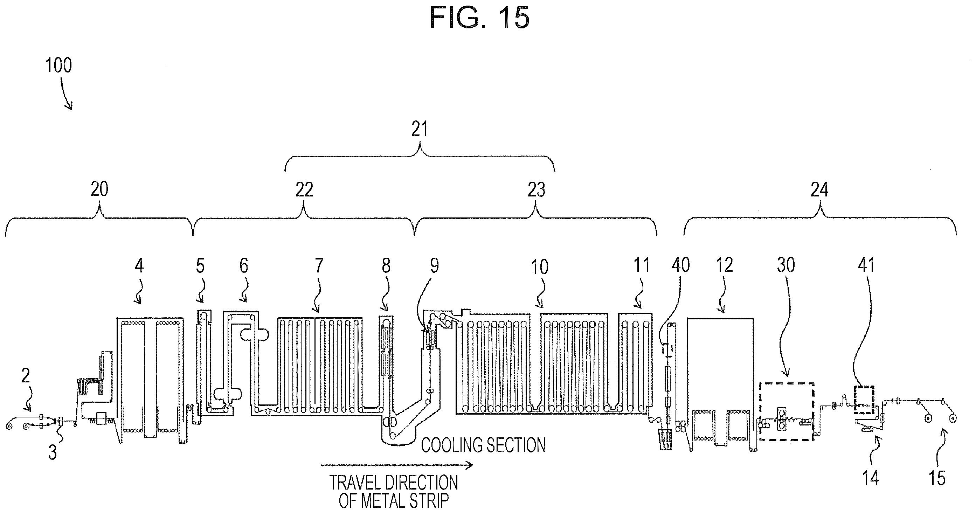

Next, a continuous annealing facility 100 capable of implementing the metal-strip warped-shape control method according to the first to third embodiments will be described. Fig. 15 is a schematic diagram illustrating an example of equipment in the continuous annealing facility 100, which manufactures cold-rolled steel sheets. Note that the arrow in Fig. 15 indicates the travel direction of the metal strip 1.

The continuous annealing facility 100 is broadly divided into entry-side facility 20, furnace facility 21, and exit-side facility 24. The temper rolling system 30 is provided in the exit-side facility 24. The continuous annealing facility 100 including the temper rolling system 30 is another example of a facility for manufacturing the metal strip 1, where the warped-shape control method for the metal strip 1 according to the first embodiment can be implemented. Note that, in the case of applying the second embodiment to the continuous annealing facility 100, the temper rolling system 30 may be replaced with the temper rolling system 70. In the case of applying the third embodiment to the continuous annealing facility 100, the temper rolling system 30 may be replaced with the temper rolling system 72. The operation of the continuous annealing facility 100 is controlled by the control computer 17 and the control controller 18.

The entry-side facility 20 includes a payoff reel 2, a welding machine 3, and an entry-side looper 4. The furnace facility 21 is constituted of annealing facility 22 and reheating facility 23. The annealing facility 22 includes a heating zone 6, a soaking zone 7, and a cooling zone 8, and may include a preheating zone 5 upstream of the heating zone 6. The reheating facility 23 includes a reheating zone 9, an overaging zone 10, and a final cooling zone 11, and an induction heating device is disposed in the reheating zone 9. The exit-side facility 24 includes an exit-side looper 12, an inspection table 14, and a tension reel 15.

Equipment that heats the metal strip 1 is disposed in the heating zone 6. The metal strip 1 is heated to a preset temperature within a range of about 600 to 900°C in accordance with the chemical composition of the metal strip 1. In the heating zone 6, a direct-fired or radiant combustion burner is used. Equipment for maintaining the metal strip 1 at a predetermined temperature is disposed in the soaking zone 7. The equipment for maintaining the metal strip 1 at the predetermined temperature is equipment with heating capacity sufficient to compensate for heat dissipation from the furnace body and the like.

Equipment that cools the metal strip 1 to a predetermined temperature is disposed in the cooling zone 8. As cooling means of the equipment, liquid cooling, gas jet cooling, roll cooling, mist cooling (gas-liquid mixture cooling), and the like are used. Liquid cooling is often performed by water cooling (water quenching) using water. Water cooling is a cooling means that immerses the metal strip 1 in a dipping tank installed downstream of the soaking zone 7 to cool it. Gas jet cooling is a cooling means that blows gas from nozzles onto the surface of the metal strip 1. Roll cooling is a cooling means that brings the metal strip 1 into contact with water-cooling rolls to cool it. Mist cooling is a cooling means that sprays water in a fine mist to cool the metal strip 1 by absorbing the heat of vaporization. In mist cooling, the size of the water droplets sprayed is often about 0.1 to 1 mm.

The reheating facility 23 is disposed downstream of the cooling zone 8. After the metal strip 1 is cooled to a predetermined temperature in the cooling zone 8, the metal strip 1 is reheated to approximately 300 to 400°C using the induction heating device or the like disposed in the reheating zone 9. The overaging zone 10 is equipment that performs an overaging process in which the reheated metal strip 1 is held for a predetermined period of time. The final cooling zone 11 is equipment that finally cools the overaged metal strip 1 to nearly room temperature. Note that some continuous annealing facilities are not equipped with the reheating equipment 23.

The exit-side looper 12 is equipment that temporarily stores the metal strip 1 to make adjustments between the line speed of the metal strip 1 in the furnace equipment 21 and the processing speed of the exit-side equipment 24. At the inspection table 14, inspections of the dimensional accuracy and surface quality of the metal strip 1 are conducted. The tension reel 15 is equipment that winds up the metal strip 1 in a coil shape. The metal strip 1, which is wound-up into a coil by the tension reel 15 and determined to be acceptable through quality inspection at the inspection table, may either be shipped as a product coil or sent to surface treatment equipment for plating the metal strip 1, where surface treatment is performed. In contrast, the metal strip 1, which is determined to be unacceptable or on hold through quality inspection at the inspection table, is sent to a recoiling line, where adjustments to the dimensions and weight of the metal strip 1 are made, samples for quality verification are collected, shape and dimensional inspections are conducted, and the coil is rewound.

The temper rolling system 30 is disposed between the exit-side looper 12 and the inspection table 14. The work rolls 32a and 32b used in the temper rolling mill 31 in the temper rolling system 30 need to be replaced at a predetermined timing. By disposing the temper rolling mill 31 downstream of the exit-side looper 12, changes in the speed of the metal strip 1 in the furnace facility 21 when replacing the work rolls 32a and 32b can be suppressed by the exit-side looper 12.

In the continuous annealing facility 100, the entry-side warped-shape measurement device 40 may be disposed at any position as long as the position is downstream of the furnace equipment 21 and upstream of the temper rolling mill 31. This is because no equipment that significantly changes the warped shape of the metal strip 1 is provided downstream of the furnace equipment 21. In the example illustrated in Fig. 15, the entry-side warped-shape measurement device 40 is provided downstream of the final cooling zone 11.

Additionally, in the case of providing the exit-side warped-shape measurement device 41 downstream of the temper rolling mill 31, it is preferable to provide it in the vicinity of the inspection table 14. In some cases, the exit-side warped shape of the metal strip 1 serves as an item of product quality inspection. Therefore, by providing the exit-side warped-shape measurement device 41 in the vicinity of the inspection table 14, it becomes easier to associate the exit-side warped shape of the metal strip 1 with the results of other quality inspections. Typically, the distance that the metal strip 1 is conveyed from the temper rolling mill 31 to the inspection table 14 ranges from 20 to 100 m, and the conveying time from the temper rolling mill 31 to the inspection table 14 is about 2 to 120 seconds.

It is preferable to dispose the temper rolling mill 31 downstream of the heating zone 6 for continuously heating the metal strip 1 and the cooling zone 8 for cooling the metal strip 1 heated in the heating zone 6. The heating by the heating zone 6 and the cooling by the cooling zone 8 cause the warping in the width direction of the metal strip 1. Therefore, by disposing the temper rolling mill 31 downstream of the heating zone 6 and the cooling zone 8, the warp height in the width direction of the metal strip 1, generated by the cooling by the cooling zone 8, can be reduced.

In this way, the manufacturing facility for metal strips where the metal-strip warped-shape control method according to the embodiment can be implemented may be the temper rolling system 30, 70, or 72 illustrated in Fig. 1, 10, or 12, or it may be the continuous annealing facility 100 illustrated in Fig. 15.

EXAMPLE

Next, an example will be described in which the exit-side warped shape of the metal strip 1 was controlled using the continuous annealing facility 100 illustrated in Fig. 15, where the temper rolling system 30 was changed to the temper rolling system 72. The metal strip 1 used in this example is a high-strength steel sheet with a tensile strength TS specification of 1180 MPa, a thickness of 1.6 mm, and a width of 921 mm. As for the operating conditions of the temper rolling mill 31, the entry-side tension and the exit-side tension applied to the metal strip 1 were set to 70 kN, and the roll gap was varied to change the elongation percentage within a range of 0.05 to 0.10%.

In this example, the warped-shape prediction model 99 was generated in advance by the warped-shape prediction model generation section 96 of the warped-shape control device 80, and the warped-shape of the metal strip 1 was controlled using the warped-shape prediction model 99. The exit-side warped shape used to generate the warped-shape prediction model 99 is the distribution of the warp height in the width direction measured by the exit-side warped-shape measurement device 41. Specifically, the warp height measured at each position, divided along the width direction of the metal strip 1 at an interval of 5 mm, was used. Similarly, for the entry-side warped shape serving as input for the warped-shape prediction model, the distribution of the entry-side warp height measured at each position, divided along the width direction of the metal strip 1 at an interval of 5 mm, was used. As for the operating parameters of the temper rolling mill 31 used as input for the warped-shape prediction model, the elongation percentage imparted to the metal strip 1 by the temper rolling mill 31 and the setting values for the bending force of the work roll bender were used.

The warped-shape prediction model 99 was generated using these items of actual data stored in the database 98, employing a neural network approach. As for the neural network, a neural network with three intermediate layers and 256 nodes each was used, with a sigmoid function used as the activation function.

The warped-shape control device 80 compared the target value (target warp value) of the exit-side warped shape set by the determination section 90 with the exit-side warped shape predicted by the warped-shape prediction model. Regarding the target warp value, with the maximum value of the warp height in the width direction of the metal strip 1 set to 5 mm, it was determined to be acceptable when the maximum value of the warp height of the exit-side warped shape, output from the warped-shape prediction model, was 5 mm or less, and determined to be unacceptable when the maximum value exceeded 5 mm. If the exit-side warped shape was determined to be unacceptable by the determination section 90, the predicted exit-side warped shape was output to the approximation-curve calculation section 92.

The predicted exit-side warped shape of the metal strip output from the warped-shape prediction model was the warp height at each position divided along the width direction of the metal strip at a interval of 5 mm, and the approximation-curve calculation section 92 calculated an approximation curve that approximates this with a quadratic curve. Specifically, the approximation-curve calculation section 92 calculated the approximation curve by approximating the predicted result of the exit-side warped shape with the following equation.

$$H = a1 \times (x-W/2)^2 + a2 \quad ... \quad (1)$$

Note that H is the warp height (mm), x is the distance (mm) from the edge portions of the width, W is the width (mm) of the metal strip, and coefficients a1 and a2 are parameters for defining the approximation curve. Coefficients a1 and a2 were calculated based on the condition that the error between the exit-side warped shape predicted by warped-shape prediction model and the function of Equation (1) was minimized using the least squares method.

The operating-parameter specification section 94 specified operating parameters of the temper rolling mill 31 that can reduce the exit-side warped shape based on the approximation curve of Equation (1) calculated by the approximation-curve calculation section 92. Specifically, if coefficient a1 of Equation (1) was positive, indicating that the warp height near the edge portions of the width was larger than that in the center portion of the width, the setting values for the bending force of the work roll bender in the temper rolling mill 31 was specified to be smaller than the current setting values. In contrast, if coefficient a1 of Equation (1) was negative, indicating that the warp height in the vicinity of the edge portions of the width was smaller than that in the center portion of the width, the setting values for the bending force of the work roll bender in the temper rolling mill 31 were specified to be larger than the current setting values. The warped-shape control device 80 output the setting values for the bending force of the work roll bender, specified by the operating-parameter specification section 94, to the control controller 18. Then, the control controller 18 multiplied the gain used in conventional proportional-integral control with the setting values for the bending force acquired from the warped-shape control device 80 and output it to the temper rolling mill 31, thereby changing the operating condition of the temper rolling mill 31.

Note that the process performed by the operating-parameter specification section 94 described above was executed during temper rolling on the metal strip 1 by the temper rolling mill 31, at an interval of 5 to 20 m in the longitudinal direction of the metal strip. In this way, the exit-side warped shape in the longitudinal direction of the metal strip 1 was controlled.

As a result, for the 20 manufactured metal strips 1, the acceptance rate, where the exit-side warped shape was less than or equal to the target warp value across the entire length in the longitudinal direction, reached 100%, significantly improving the warped shape of the metal strips 1 compared to the conventional acceptance rate of 85% where the example was not applied.

Reference Signs List

| | |
|---|---|
| 1 | metal strip |
| 2 | payoff reel |
| 3 | welding machine |
| 4 | entry-side looper |
| 5 | pre-heating zone |
| 6 | heating zone |
| 7 | soaking zone |
| 8 | cooling zone |
| 9 | reheating zone |
| 10 | overaging zone |
| 11 | final cooling zone |
| 12 | exit-side looper |
| 14 | inspection table |
| 15 | tension reel |
| 17 | control computer |
| 18 | control controller |
| 21 | furnace facility |
| 22 | annealing facility |
| 23 | reheating facility |
| 24 | exit-side facility |
| 30 | temper rolling system |
| 31 | temper rolling mill |
| 32a | work roll |
| 32b | work roll |
| 33a | backup roll |
| 33b | backup roll |
| 34 | rolling reduction device |
| 35 | bearing box |
| 36 | entry-side bridle rolls |
| 37 | entry-side tension meter |
| 38 | exit-side tension meter |
| 39 | exit-side bridle rolls |
| 40 | entry-side warped-shape measurement device |
| 41 | exit-side warped-shape measurement device |
| 42 | load detector |
| 43a | work roll chock |
| 43b | work roll chock |
| 44 | laser-scanning-type laser rangefinders |
| 50 | warped-shape control device |
| 51 | warped-shape control device |
| 52 | control section |
| 53 | control section |
| 54 | input section |
| 56 | output section |
| 58 | memory section |
| 60 | acquisition section |
| 62 | approximation-curve calculation section |
| 64 | operating-parameter specification section |
| 70 | temper rolling system |
| 72 | temper rolling system |
| 80 | warped-shape control device |
| 82 | control section |
| 84 | memory section |
| 86 | acquisition section |
| 88 | warped-shape prediction section |
| 90 | determination section |
| 92 | approximation-curve calculation section |
| 94 | operating-parameter specification section |
| 96 | warped-shape prediction model generation section |
| 98 | database |
| 99 | warped-shape prediction model |
| 100 | continuous annealing facility |

**Claims**

1. In a metal-strip manufacturing facility including a temper rolling mill that corrects a shape of a metal strip continuously conveyed, and a warped-shape measurement device that measures a warped shape of the metal strip, a metal-strip warped-shape control method for controlling an exit-side warped shape, which is a warped shape of the metal strip downstream of the temper rolling mill, comprising:

   calculating an approximation curve for the warped shape of the metal strip using an approximation method selected from parabolic approximation, circular arc approximation, and envelope approximation; and
   based on the calculated approximation curve, setting operating parameters of the temper rolling mill that can reduce the warp height of the exit-side warped shape.

2. The metal-strip warped-shape control method according to Claim 1, wherein:

   the warped-shape measurement device is an entry-side warped-shape measurement device that measures an entry-side warped shape of the metal strip upstream of the temper rolling mill; and
   an approximation curve for the entry-side warped shape measured by the entry-side warped-shape measurement device is calculated.

3. The metal-strip warped-shape control method according to Claim 1, wherein:

   the warped-shape measurement device is an exit-side warped-shape measurement device that measures the exit-side warped shape of the metal strip downstream of the temper rolling mill; and
   an approximation curve for the exit-side warped shape measured by the exit-side warped-shape measurement device is calculated.

4. The metal-strip warped-shape control method according to Claim 1, wherein:

the warped-shape measurement device is an entry-side warped-shape measurement device that measures an entry-side warped shape of the metal strip upstream of the temper rolling mill; and

the exit-side warped shape is predicted using a warped-shape prediction model that receives input data including the entry-side warped shape measured by the entry-side warped-shape measurement device and at least one of operating parameters of the temper rolling mill, and outputs the exit-side warped shape, and an approximation curve for the predicted exit-side warped shape is calculated.

5. The metal-strip warped-shape control method according to any one of Claims 1 to 4, wherein:

the manufacturing facility is a continuous annealing facility that performs heat treatment on the metal strip; and
the temper rolling mill is disposed downstream of a heating zone for heating the metal strip and a cooling zone for cooling the metal strip heated in the heating zone.

6. A metal-strip manufacturing method for manufacturing a metal strip with a tensile strength of 980 MPa or higher using the metal-strip warped-shape control method according to any one of Claims 1 to 4.

7. A metal-strip manufacturing method for manufacturing a metal strip with a tensile strength of 980 MPa or higher using the metal-strip warped-shape control method according to Claim 5.

8. A metal-strip warped-shape control device that, in a metal-strip manufacturing facility including a temper rolling mill that corrects a shape of a metal strip continuously conveyed, and a warped-shape measurement device that measures a warped shape of the metal strip, controls an exit-side warped shape, which is a warped shape of the metal strip downstream of the temper rolling mill, comprising:

an acquisition section that acquires the warped shape measured by the warped-shape measurement device;
an approximation-curve calculation section that calculates an approximation curve for the warped shape using an approximation method selected from parabolic approximation, circular arc approximation, and envelope approximation; and
an operating-parameter specification section that, based on the approximation curve, specifies operating parameters of the temper rolling mill so that the warp height of the exit-side warped shape is reduced.

9. The metal-strip warped-shape control device according to Claim 8, wherein:

the warped-shape measurement device is an entry-side warped-shape measurement device that measures an entry-side warped shape of the metal strip upstream of the temper rolling mill; and
the acquisition section acquires the entry-side warped shape measured by the entry-side warped-shape measurement device, and the approximation-curve calculation section calculates an approximation curve for the entry-side warped shape.

10. The metal-strip warped-shape control device according to Claim 8, wherein:

the warped-shape measurement device is an exit-side warped-shape measurement device that measures the exit-side warped shape of the metal strip downstream of the temper rolling mill; and
the acquisition section acquires the exit-side warped-shape measured by the exit-side warped-shape measurement device, and the approximation-curve calculation section calculates an approximation curve for the exit-side warped shape.

11. The metal-strip warped-shape control device according to Claim 8, further comprising:

a warped-shape prediction section,
wherein the warped-shape measurement device is an entry-side warped-shape measurement device that measures an entry-side warped shape of the metal strip upstream of the temper rolling mill; and
the acquisition section acquires the entry-side warped shape measured by the entry-side warped-shape measurement device, the warped-shape prediction section predicts the exit-side warped shape using a warped-shape prediction model that receives input data including the entry-side warped shape and at least one of operating parameters of the temper rolling mill, and outputs the exit-side warped shape, and the approximation-curve calculation section calculates an approximation curve for the predicted exit-side warped shape.

12. The metal-strip warped-shape control device according to any of Claims 8 to 11, wherein:

the manufacturing facility is a continuous an-

**EP 4 556 131 A1**

nealing facility that performs heat treatment on the metal strip; and

the temper rolling mill is disposed downstream of a heating zone for heating the metal strip and a cooling zone for cooling the metal strip heated in the heating zone.

# FIG. 1

# FIG. 2

(a)

(b)

## FIG. 3

## FIG. 4

## FIG. 5

# FIG. 6

# FIG. 7

# FIG. 8

(a)

CENTER IN WIDTH DIRECTION    INSUFFICIENT UNIT WIDTH LOAD

UNIT WIDTH LOAD

~1

(b)

CENTER IN WIDTH DIRECTION    METAL STRIP 1 BEFORE TEMPER ROLLING

WARP IN CENTER
IS CORRECTED

WARP IS NOT CORRECTED IN PORTIONS
WITH INSUFFICIENT APPLIED LOAD

METAL STRIP 1 AFTER TEMPER ROLLING

# FIG. 9

(a)

1

POSITION IN WIDTH DIRECTION

(b)

ENVELOPE APPROXIMATION CURVE

WARP HEIGHT

POSITION IN WIDTH DIRECTION

(c)

1

POSITION IN WIDTH DIRECTION

# FIG. 10

70

17
CONTROL
COMPUTER

18
CONTROL
CONTROLLER

51
WARPED-SHAPE
CONTROL DEVICE

34
31
33a
35
32a

1
TRAVEL DIRECTION
OF METAL STRIP

37

36

32b

38

39

41

42

33b

# FIG. 11

51

53

61
ACQUISITION SECTION

62
APPROXIMATION-CURVE
CALCULATION SECTION

64
OPERATING-PARAMETER
SPECIFICATION SECTION

41

18

54
INPUT SECTION

56
OUTPUT SECTION

58
MEMORY SECTION

# FIG. 12

# FIG. 13

80

82

86
ACQUISITION SECTION

18, 40 →

54
INPUT SECTION

88
WARPED-SHAPE
PREDICTION SECTION

56
OUTPUT SECTION

90
DETERMINATION
SECTION

84
MEMORY SECTION

98
DATABASE

92
APPROXIMATION-CURVE
CALCULATION SECTION

94
OPERATING-PARAMETER
SPECIFICATION SECTION

18 ←

99
WARPED-SHAPE
PREDICTION
MODEL

96
WARPED-SHAPE
PREDICTION MODEL
GENERATION SECTION

# FIG. 14

# FIG. 15

COOLING SECTION

TRAVEL DIRECTION
OF METAL STRIP

| INTERNATIONAL SEARCH REPORT | International application No. |
| --- | --- |
| | **PCT/JP2023/027672** |

**A.    CLASSIFICATION OF SUBJECT MATTER**

*B21B 37/28*(2006.01)i; *B21B 1/22*(2006.01)i; *B21B 37/38*(2006.01)i; *B21B 37/56*(2006.01)i; *B21B 38/02*(2006.01)i; *B21C 51/00*(2006.01)i; *B21D 1/05*(2006.01)i

FI:   B21B37/28 140; B21B1/22 H; B21B37/38 D; B21B37/56; B21B38/02; B21C51/00 L; B21D1/05 F; B21D1/05 H; B21D1/05 P

According to International Patent Classification (IPC) or to both national classification and IPC

**B.    FIELDS SEARCHED**

Minimum documentation searched (classification system followed by classification symbols)

B21B37/28; B21B1/22; B21B37/38; B21B37/56; B21B38/02; B21C51/00; B21D1/05

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | CN 107552573 A (SHOUGANG JINGTANG UNITED IRON & STEEL CO., LTD.) 09 January 2018 (2018-01-09)<br>      paragraphs [0001]-[0134], fig. 1-9 | 1-3, 8-10 |
| Y | | 2-3, 5-7, 9-10, 12 |
| A | | 4, 11 |
| Y | JP 2020-062680 A (JFE STEEL CORP) 23 April 2020 (2020-04-23)<br>      paragraphs [0001]-[0049], fig. 3 | 2-3, 5-7, 9-10, 12 |
| Y | JP 2010-066132 A (NIPPON STEEL CORP) 25 March 2010 (2010-03-25)<br>      paragraphs [0001]-[0032], fig. 3 | 2-3, 5-7, 9-10, 12 |
| Y | JP 2013-176802 A (JFE STEEL CORP) 09 September 2013 (2013-09-09)<br>      paragraphs [0001]-[0025] | 2-3, 5-7, 9-10, 12 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 September 2023** | **12 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/027672**

| Patent document cited in search report | | | Publication date (day/month/year) | Patent family member(s) | Publication date (day/month/year) |
|---|---|---|---|---|---|
| CN | 107552573 | A | 09 January 2018 | (Family: none) | |
| JP | 2020-062680 | A | 23 April 2020 | (Family: none) | |
| JP | 2010-066132 | A | 25 March 2010 | (Family: none) | |
| JP | 2013-176802 | A | 09 September 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013176802 A
- JP 6673285 B
- JP 2018065190 A